# EUROPEAN PATENT APPLICATION

(11) **EP 2 455 762 A1**
(43) Date of publication of application: **23.05.2012**
(21) Application number: 10191614.6
(22) Date of filing: 17.11.2010
(51) Int. Cl.: G01N 35/04, G01N 35/00

(54) **Laboratory automation system**

(71) Applicant: M-u-t AG Messgeräte für Medizin- und Umwelttechnik, 22880 Wedel (DE)
(72) Inventor: Hoffmann, Uwe, 25371 Seestermühe (DE)
(74) Representative: UEXKÜLL & STOLBERG

(57) **Abstract**

The present invention relates to a laboratory automation system for automatically handling sample containers (27) comprising a controller adapted for controlling the system (1) to carry out a laboratory automation method. The system (1) comprises multiple separate, selectively removable sample container handling modules (2) coupled to each other in series. Each module (2) comprises a frame (3) having first and second faces (24, 25), a conveyor (23) having first and second ends (40, 41) proximate the first and second faces (24, 25) for transporting sample containers (27) between the two ends (40, 41), and mechanical coupling means (13) arranged at the first and second faces. At least one of the modules (2) comprises a sample container processing device (9-11) supported on the frame (3) for automatically performing a sample container processing step, and a transport means (30) for transporting sample containers (27) between the conveyor (23) and the sample container processing device (9-11). The controller is communicatively coupled to each module (2) via a communication link. Each two adjacent modules (2) are arranged with the first face (24) of one modules (2) facing the second face (25) of the other module (2) and are mechanically coupled by means of the mechanical coupling means (13) such that the conveyors (23) of the individual modules (2) together form an overall continuous conveyor extending along the length of the system (1) and suitable for continuously transporting sample containers (27) along the length of the system (1).

## Description

The present invention relates to a laboratory automation system for automatically handling and/or processing sample containers, in particular in a pre-analytical and/or post-analytical stage, and to sample container handling modules adapted for constructing a corresponding laboratory automation system.

In various fields of technology it is necessary to analyze samples taken at a particular location in a remote laboratory. For the purpose of transporting the samples to the laboratory and inside the laboratory, each sample is usually disposed in a sealed sample container. Such sample containers typically comprise a suitable cap by means of which they can be selectively closed and opened.

In order to allow for a high sample throughput in the laboratories they advantageously utilize laboratory automation systems which handle and process the sample containers prior to an analysis stage and/or subsequent to an analysis stage, i.e. pre-analytically prior to analysis of samples contained in the sample containers and/or post-analytically subsequent to analysis of samples contained in the sample containers. For example, typical automatic handling or processing steps performed by such laboratory automation systems include detecting, identifying and sorting incoming sample containers in accordance with various criteria, registering the sample containers with a central controller, selectively opening or decapping and closing or recapping the sample containers, storing the sample containers in an intermediate storage or an output storage and/or transferring portions of a sample contained in a sample container into a different sample container of the same or a different type. In this manner laboratory automation systems can be designed for bulk handling of sample containers in that they are e.g. adapted to receive a bulk amount of sample containers at an input section and to automatically transport the sample containers to individual locations and prepare them for analysis.

Laboratory automation systems are of particular importance in the field of medical diagnostics where e.g. blood or urine samples taken by doctors are transported to medical laboratories in sample containers, commonly cylindrical sample containers or tubes closed by caps. The sample containers typically include identification means for identifying the particular patient and doctor and possibly the kind of analysis to be performed, e.g. in the form of barcodes printed on the container or in the form of RFID tags. In the laboratory the sample containers have to be detected and identified automatically (e.g. on the basis of barcode, dimensions, cap color, etc.) and have to be sorted for target location, e.g. analysis, archive, etc. and processed, e.g. decapped, in accordance with certain criteria such that different sample containers are disposed in different racks. Further, it may be provided that faulty sample containers or samples are removed from the usual process and processed separately or discarded. Different racks then include, for example, different types of samples (e.g. blood and urine) and different amounts of samples for different types of analysis. The different racks are then transported manually, semi-automatically or fully automatically to the various actual analysis devices. These sample container processing and handling steps belong to the pre-analytical stage.

Following analysis the samples are often not disposed immediately, but rather the samples are archived for a defined period of time. Thus, laboratory automation systems and in particular systems for medical laboratories may also handle and process sample containers subsequent to analysis similar to the above manner for selectively transferring them in a sorted manner to suitable racks in an archive. Processing steps in this regard may include recapping and further sorting of the sample containers.

Such laboratories automation systems and in particular medical laboratories automation systems are important for minimizing manual steps to the greatest possible extent in order to increase efficiency and decrease labor costs before the background of the usually high time and cost pressure, the large number of samples to be analyzed and the requirement to maintain defined quality standards. Further, automation systems serve to streamline the laboratory processes for minimizing possibilities of errors and increasing reliability.

Known laboratory automation systems typically comprise a plurality of functional units which carry out different functional steps in the overall automation process and between which the sample containers are transferred by suitable transport means. In order to meet the requirements of laboratories of different size and performing different kinds of analyses, various different laboratory automation systems fixedly preconfigured with different functional units are available. In some cases, providers of laboratory automation system manufacture systems to be customer specific by preconfiguring them with functional units in accordance with the individual requirements of the customers and shipping the custom-made systems to the customers.

Once installed in a laboratory the above known laboratory automation systems provide, if at all, only a very limited possibility to adapt them to specific needs, special requirements and changing conditions. Thus, modifying or scaling laboratory automation is difficult and expensive.

It is an object of the present invention to provide a laboratory automation system which enables flexible, easy and inexpensive adaption to individual requirements and changing conditions, and which overcomes the above disadvantages.

This object is achieved by a laboratory automation system as defined in claim 1 and by a sample container handling module as defined in claim 14. Preferred embodiments of the invention are set out in the respective dependent claims.

The laboratory automation system, which is adapted for automatically handling or processing sample containers, preferably in a pre-analytical and/or post-analytical stage, comprises a controller adapted for controlling the laboratory automation system to carry out a laboratory automation method. Thus, the system is controlled by the controller to operate as described above for known laboratory automation systems. The laboratory automation system may e.g. be a medical laboratory automation system providing the functionality described above and the sample containers may be containers for e.g. blood and/or urine and may have the shape of a tube.

The laboratory automation system further comprises a plurality of separate and distinct sample container handling modules releasably coupled to each other in series. Thus, it is advantageously possible in a flexible manner to selectively remove one or more of the modules from the system and to replace them with other modules of the same or a different type, to remove one or more modules from the system without replacing them by moving and coupling the remaining modules together, and to add one or more additional modules into the system, e.g. by releasing the coupling between two adjacent modules, moving them apart by a suitable distance and inserting one or more additional modules into the corresponding spacing.

Each module comprises a frame having a first face or side and a second face or side. Preferably the second face or side of at least some of the modules and more preferably all of the modules is disposed opposite the first face or side. In a preferred embodiment the frames have a rectangular or substantially rectangular cross-section. The frames may or may not support a housing or be formed at least in part by a housing and they may or may not be of identical dimensions.

Further, each module comprises a conveyor having a first end proximate the first face and a second end proximate the second face. The conveyor is adapted for transporting and preferably automatically transporting sample containers between the first end and the second end. In particular, the conveyor of a module may extend between the first face and the second face.

Finally, each module also comprises mechanical coupling means arranged at or on the first face and the second face. As will become apparent later-on, it is preferred that at least one mechanical coupling means is provided at or on each of the first face and the second face. However, it is also possible that the two modules at the two ends of the plurality of modules coupled in series have a mechanical coupling means at or on one of their faces only.

Moreover, one, more or preferably all or substantially all of the modules further comprises one or more sample container processing devices supported on the frame and adapted for automatically performing a respective sample container handling or processing step, and a transport means for automatically transporting sample containers between the conveyor of the module and the one or more sample container processing devices. The sample container processing devices are adapted to perform, amongst others, one or more of the various steps mentioned above with respect to the known laboratory automation systems. In order to achieve a compact arrangement, it is preferred that all or substantially all of the modules comprise one or more sample container processing devices. However, modules without sample container processing devices and comprising e.g. only the conveyor supported by a smaller-sized frame may be useful for bridging locations at which there is no room for a larger sized module including a sample container processing device.

The controller is communicatively coupled to each module via a suitable communication link and is adapted for controlling the operation of the individual modules via the communication link, in particular e.g. the operation of the conveyors, sample container processing devices and/or transport means. The communication link may comprise separate wireless or wired communication links between the controller and the individual modules. However, it is preferred that the controller and at least some and more preferably all of the individual modules are connected to a common wireless or wired communication link. As will be outlined below, it is particularly advantageous if the common communication link is formed by a data bus. It should be noted that the controller may directly control components of the individual modules, such as the conveyors, sample container processing devices and/or transport means, or may indirectly control such components via module-specific subordinate controllers located in the modules.

Each two adjacent modules are arranged with the first face of one of the two modules facing the second face of the other of the two modules and are mechanically coupled in this position by means of the mechanical coupling means at or on the facing first and second faces in such a manner that the conveyors of the individual modules together form an overall continuous conveyor extending along the length of the laboratory automation system and suitable for continuously transporting sample containers along the length of the laboratory automation system.

In other words, for each pair of adjacent modules the two facing faces or surfaces include a first mechanical coupling means and a second mechanical coupling means, respectively, which are arranged in relative positions to allow them to cooperate for coupling the two modules. Advantageously, the cooperating mechanical coupling means are constructed such that the two modules are coupled such that they have a predefined distance from each other. Although it is possible for the cooperating mechanical coupling means to require an additional element for interconnecting the two coupling means and effecting the coupling, it is preferred that the two cooperating coupling means are provided in the form of complementary locking means, such as e.g. a locking lever on one module and a complementary locking arrangement on the other module or a different type of latching arrangement, for example of the snap-in type. It is particularly preferred if the mechanical coupling merely or essentially requires moving the two modules together in a relative position suitable for placing the two cooperating mechanical coupling means proximate to each other and bringing them into engagement. In any case, the mechanical coupling effected by the cooperating mechanical coupling means is releasable.

In the coupled state of the plurality of modules, i.e. once they are coupled in series by means of the mechanical coupling means, the each conveyor of an individual module constitutes a conveyor section of an overall continuous conveyor extending from the first module in the series of coupled modules to the last module in the series of modules, i.e. along the length of the system. This overall continuous conveyor is suitable for transporting sample containers between all modules and avoids the necessity to provide separate means for transferring sample containers between the conveyors of adjacent modules. If only modules are used in which the first face is disposed opposite the second face, the coupled series of modules will preferably form a straight or substantially straight arrangement. However, it is also possible to use at least one module in which the second face is e.g. arranged at an angle of 90° with respect to the first face, thereby enabling a curved or angled arrangement.

The laboratory automation system having the above construction has the advantage that a customer has a high degree of flexibility in constructing an individual system adapted to his specific needs and requirements, and that it is later-on easily and flexibly possible in a relatively inexpensive manner to modify or expand the system in order to adapt it to changing conditions and requirements. These advantages are achieved by the modular design including separate and distinct modules which can be flexibly configured in different arrangements. Flexible configuration and reconfiguration is greatly facilitated by the fact that each module integrally comprises its own section of an overall conveyor extending throughout the system and by the fact that upon coupling the modules the individual conveyor sections form, preferably automatically, the overall conveyor.

In a preferred embodiment the conveyor of each module comprises two distinct conveyor portions extending, e.g. in parallel side by side or one above the other, between the first end and the second end of the conveyor, wherein the two conveyor portions are adapted for transport in opposite directions. In this manner, the overall conveyor formed by the conveyors of the individual modules likewise comprises two distinct portions for simultaneously transporting sample containers in the two directions along the system. In this regard, it is further advantageous if at least the modules at the ends of the series of coupled modules or all modules comprise mechanical sample container shifting means adapted for selectively shifting sample containers between the two portions.

Although any kind of transport means having a first end proximate the first face and a second end proximate the second face and being adapted for automatically transporting sample containers between the first end and the second end is suitable to be used as the conveyor, it is preferred that the conveyor of each module comprises a conveyor belt and preferably a continuous conveyor belt. The conveyor belts of the individual modules would then form together a single and continuous composite conveyor belt arrangement. In the above embodiment in which each conveyor of a module comprises two distinct conveyor sections for the two transport directions, each conveyor section would then advantageously be constituted by a separate (continuous) conveyor belt.

In any case, it is preferred that the conveyor of each module is arranged such that after mechanical coupling of two adjacent modules by means of the mechanical coupling means the first end of the conveyor of one of the two adjacent modules is located adjacent the second end of the conveyor of the other of the two adjacent modules in such a manner that sample containers can be transported by the conveyors from one conveyor to the other. In other words, the conveyors are automatically functionally coupled when mechanically coupling adjacent modules. However, it is also possible that the adjacent ends of the conveyors have to be functionally coupled by suitable means.

The conveyor of each module may be arranged along one side of the frame extending between the first face and the second face, possibly on the exterior of the frame.

In a preferred embodiment the sample container processing devices of the modules comprising such devices are selected from the group comprising sample container detection devices, sample container identification devices, sample container sorting devices, sample container decapping devices, sample container recapping devices and sample container storing devices.

It is also advantageous if each module comprises at least one electrical connection terminal at or on the first face and the second face and preferably at or on each of the first and the second faces, wherein the electrical connection terminals are arranged to enable electrical coupling of adjacent modules by means of cooperating ones of the electrical connection terminals arranged at or on the facing first and second faces of the two modules such that power can be transferred along the sequence of modules between adjacent modules. In other words, similar to the mechanical coupling means the electrical connection terminals are arranged such that an electrical connection can be easily effected or is automatically effected by moving adjacent modules in the appropriate position for coupling them mechanically in the above manner. By providing such electrical connections the individual modules do not have to be connected separately to an electrical power supply. Rather, it is sufficient if only one of the modules or the controller is connected to a power supply.

In a further preferred embodiment each module also comprises at least one communication port at or on the first face and the second face and preferably at or on each of the first and the second faces, wherein the communication ports are arranged to enable communicatively connecting adjacent modules by means of cooperating ones of the communications ports arranged at or on the facing first and second faces of the two modules. In other words, similar to the mechanical coupling means and the optional electrical connection terminals described above, the communication ports are arranged such that a communication connection can be easily effected or is automatically effected by moving adjacent modules in the appropriate position for coupling them mechanically in the above manner. By providing such communication connections the individual modules do not have to be communicatively connected separately to the controller. Rather, all modules can communicate with the controller via a common communication link.

In that case, it is particularly advantageous if the individual modules are communicatively connected to a common data bus by means of the cooperating communication ports at or on the facing first and second faces of adjacent modules, and wherein the controller is likewise communicatively connected to the common data bus such that the data bus establishes the data link. Suitable bus systems and protocols are widely known, and it is e.g. possible to implement a master slave system in which the controller is the master and the modules are corresponding slaves. As is common in master slave systems, the modules would then preferably be adapted for automatically registering themselves on the bus and with the controller upon connection to the bus, and the controller would be adapted for polling the modules for information and for sending control commands to the modules, wherein each module may be individually addressed.

In a preferred embodiment the modules are adapted for automatically sending module identification information via the data link to the controller at least upon being integrated into the system, thereby enabling the controller to maintain information about the number, capabilities and relative arrangement of the various modules included in the system. Thus, the controller would be adapted to maintain a data base in which all modules currently present in the system are stored and in which further for each module the position of the module in the series of coupled modules and module characteristics such as the number and types of sample container processing devices and of output storage locations - such as rack receptacles described below - are stored. In the above-mentioned case of a data bus the module identification information could e.g. be sent on the bus in connection with the registration of the module on the bus. In particular, once the controller recognizes a new module it could poll the module for the above information. It is further advantageous if each module is adapted for automatically determining its relative position within the system, wherein the identification information sent by the modules includes an indication of their relative positions.

In a preferred embodiment one or more of the modules having a sample container processing device comprises as part of the sample container processing device at least one rack receptacle for receiving a rack adapted for holding a plurality of sample containers, and means for automatically detecting the presence of a rack in the at least one rack receptacle as well as the arrangement and location of sample container receiving portions, the type and/or the identity of racks received in the at least one rack receptacle. The transport means is then adapted for transporting sample containers between the conveyor and a rack received in the at least one rack receptacle. Further, at least one module is adapted for automatically sending corresponding rack identification information via the data link to the controller upon placement of a rack into a rack receptacle. This enables the controller to maintain information about the presence and the characteristics and/or identity of racks located in the at least one rack receptacle. For example, the automatic rack detection means may comprise optical means adapted for sensing the dimensions of racks or for reading a bar code provided on the racks, or may comprise an RFID tag reader for reading information RFID tags provided on the racks. In this embodiment the controller able to selectively control transport of particular sample containers into particular racks.

Thus, in case of a laboratory automation system comprising a plurality of said rack receptacles, so that each rack placed in one of the rack receptacles defines a different target location for sample containers, the controller may advantageously be adapted for controlling operation of the system such that each of a plurality of sample containers is selectively transported from an input section, such as e.g. a bulk sample container receptacle, preferably provided at one or more of the modules, to a particular target location possibly following various handling steps. The target location may be determined on the basis of predefined sorting criteria, such as doctor, patient, sample type, sample container type, type of analysis to be performed, etc.

As outlined previously, the described laboratory automation system has a high degree of flexibility due to the use of separate and distinct sample container handling modules. Each such module is constructed as described in detail above. Its construction is chosen such that a similar module can be coupled to it in the manner already explained.

Thus, the above-described design of a laboratory automation system allows for a method of constructing a laboratory automation system comprising the steps of selecting a plurality of sample container handling modules suitable for performing a desired laboratory automation method (i.e. modules having the desired or required sample container processing devices), and mechanically and possibly electrically and/or communicatively coupling the selected modules in series. Further, the design also allows for a method of modifying a laboratory automation system comprising the steps of selecting for an existing laboratory automation system of the described design at least one additional module and/or at least one of the existing modules, inserting the selected at least one additional module at an appropriate location and/or removing the selected existing module, and mechanically and possibly electrically and/or communicatively coupling the remaining modules in series. It is not necessary to build or modify a separate overall or system conveyor, because such conveyor is automatically generated or modified upon coupling the modules.

In the following, an exemplary embodiment of the invention is explained in more detail with reference to the figures.
- Figure 1: shows a schematic perspective view of an exemplary embodiment of the laboratory automation system of the present invention comprising three sample container handling modules.
- Figure 2: shows a further schematic perspective view of the laboratory automation system of Figure 1, wherein sliding covers have been shifted to the open position in order to provide access to an interior working space.
- Figure 3: shows a schematic perspective view of the rear side of the laboratory automation system of Figures 1 and 2.
- Figure 4: shows a front view of one of the sample container handling modules of the laboratory automation system.
- Figure 5: shows a rear view of one of the sample container handling modules of the laboratory automation system.

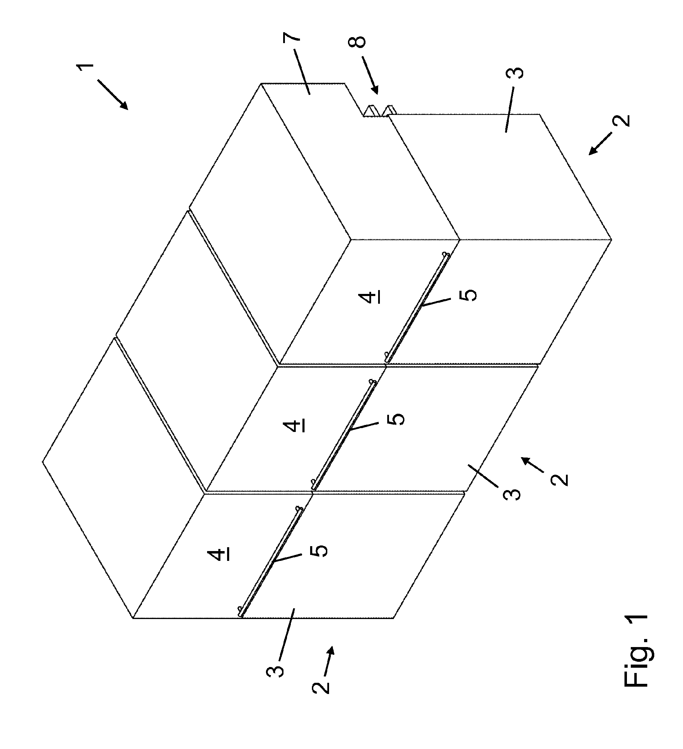

The laboratory automation system 1 shown in Figure 1 comprises three physically separate and distinct sample container handling modules 2 which are mechanically coupled in series in a linear row. Each module 2 comprises a housing or frame 3 which supports various elements to be described in the following.

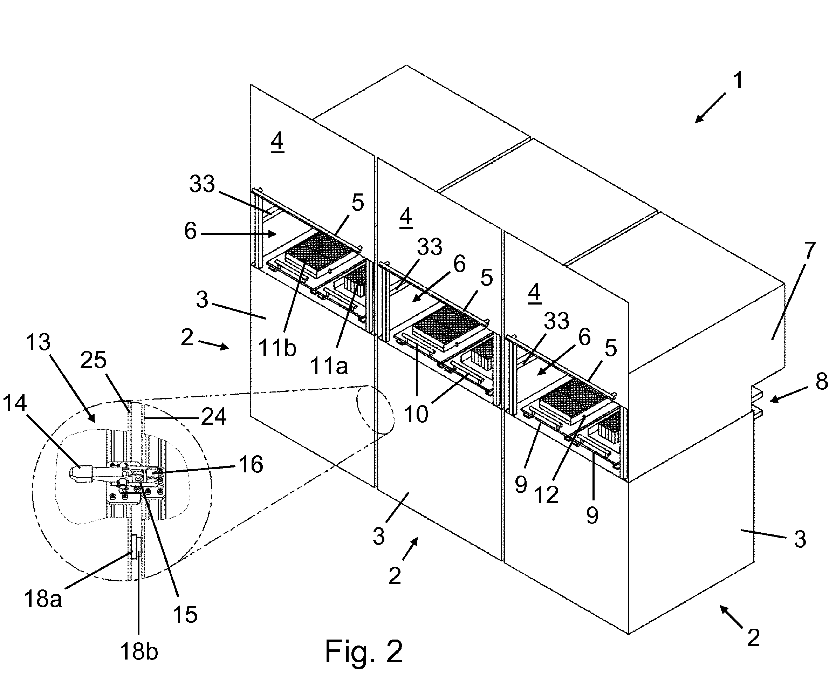

Figure 1 depicts the front side of the system 1 from which the system 1 is usually accessed by operators, wherein the housing 3 is in a closed position. In order to allow access from the front side to an interior working space 6 (see Figure 2), each module 2 is provided with a sliding cover 4 having a handle 5. As illustrated in Figure 2, the sliding cover 4 can be moved upwards into an open position and can be selectively mechanically locked in the open and in the closed position.

At the rear side of the modules 2 each of them comprises an upper cantilevered portion 7 which is overhanging a transport section 8 for transporting sample containers. The construction and arrangement of these transport sections 8 will be described in detail below.

As can be taken from Figure 2, two sliding tables 9 are disposed inside the working space 6 of each of the modules 2. The sliding tables 9 are provided with handles 10 and are supported on guide rails (not shown) such that they can be pulled completely or at least partly out of the working space 6 for manipulating or changing sample container holders 11a, 11b arranged on their upper surface. Such sample container holders 11a, 11b are typically referred to as racks and in the present example comprise an array of a plurality of sample container receiving bores each adapted for receiving and holding a tube-shaped sample container in an upright position.

The sliding tables 9 constitute rack receptacles and are adapted for fixedly supporting different types of racks 11a, 11b in a defined position. This can be achieved by providing a specific table 9 for each type of rack 11a, 11b, wherein each type of table 9 can be movably supported on the rails in the working space 6 in the manner described above. However, it is preferred that there is only one type of table 9 comprising rack fixing means 12 which can be adapted for fixing different types of racks 11a, 11b in a defined position. Also, suitable adapters could be used. In Figure 2 two different types of racks 11a, 11b having different lateral dimensions and different heights. They may be adapted for holding different types of sample containers, such as e.g. having different diameters and/or heights, and/or for holding different numbers of sample containers.

On or proximate each of the facing surfaces 24, 25 of the modules 2 cooperating mechanical coupling means are provided for mechanically coupling the modules 2. In the example illustrated in the Figures no such mechanical coupling means is provided on the outer lateral surfaces of the two outermost modules 2. However, for a maximum degree of flexibility of the use of the individual modules it is preferred that such mechanical coupling means is also arranged on or proximate these surfaces. In that case it is then possible to use any module 2 in any position within a sequence or row of modules 2.

One exemplary embodiment of a pair or set 13 of cooperating mechanical coupling means is shown in the enlarged view of the interface between the two leftmost modules 2 included in Figure 2. At the right lateral surface 25 of the leftmost module 2 a locking lever 14 attached to a bracket 15 is mounted, and at the left lateral surface 24 of the module 2 in the middle a projection 16 for engaging the bracket 15 is mounted. For mechanically coupling the two modules 2 the lever 14 is pivoted to the right, thereby moving the bracket 15 to the right in Figure 2. In this position the bracket 15 can be engaged with a recess on the right hand side of the projection 16, and after pivoting the lever 14 to the left and mechanically locking it in that position, the two modules 2 are coupled together with a defined spacing. In the illustrated embodiment a front cover of the housing of each module 2 concerned has to be temporarily removed for accessing the cooperating mechanical coupling means 13.

Further, on or proximate each of the facing surfaces 24, 25 of the modules 2 cooperating electrical connection terminals are provided for electrically and optionally also communicatively coupling the modules 2. Similar to the case of the mechanical coupling means, in the example illustrated in the Figures no such electrical connection terminals are provided on or proximate the outer lateral surfaces of the two outermost modules 2. However, for a maximum degree of flexibility of the use of the individual modules it is preferred that such electrical connection terminals are also arranged on or proximate these surfaces. In that case it is then possible to use any module 2 in any position within a sequence or row of modules 2.

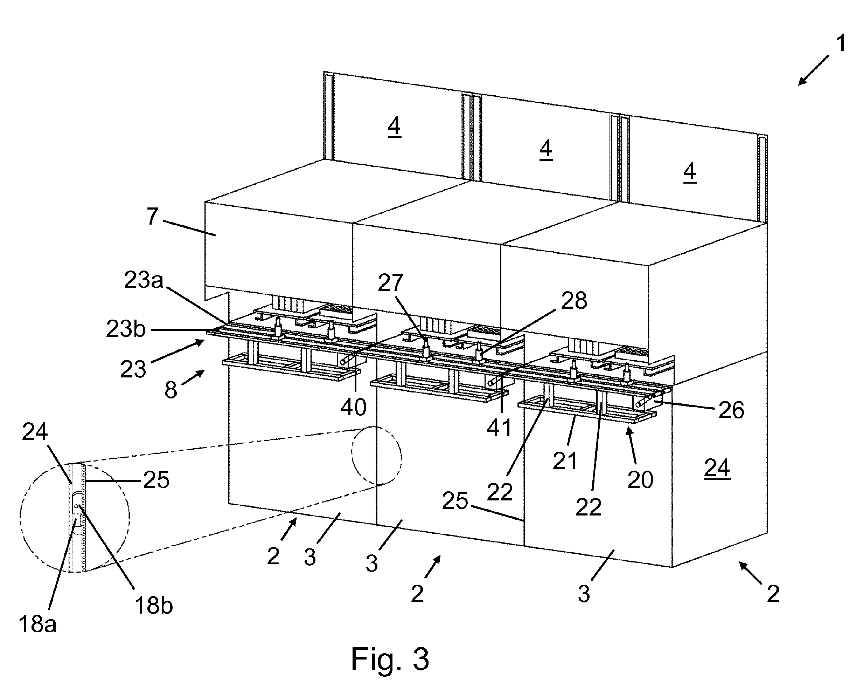

One exemplary embodiment of cooperating electrical connection terminals 17a, 17b is shown in the enlarged view of the interface between the two leftmost modules 2 included in Figure 3, which will be described in more detail below. On the right lateral surface 24 of the leftmost (in Figure 3) module 2 a socket 17a is provided, and on the left lateral surface 25 of the module 2 in the middle a mating plug 17b is provided. The socket 17a and the plug 17b are arranged such that they can operatively engage each other in the relative position of the two modules 2 defined by the mechanical coupling means 13.

As noted above, the cooperating electrical connection terminals 17a, 17b on or proximate facing first and second faces 24, 25 may be arranged to not only provide an electric connection, but also a communication connection. However, it is preferred that communicative coupling of adjacent modules 2 is effected by separate cooperating communication ports provided on or proximate each of the facing surfaces 24, 25 of the modules 2. Similar to the case of the mechanical coupling means and the electrical connection terminals, in the example illustrated in the Figures no such communication ports are provided on or proximate the outer lateral surfaces of the two outermost modules 2. However, for a maximum degree of flexibility of the use of the individual modules it is preferred that such communication ports are also arranged on or proximate these surfaces. In that case it is then possible to use any module 2 in any position within a sequence or row of modules 2.

One exemplary embodiment of cooperating communication ports 18a, 18b is shown in the enlarged view of the interface between the two leftmost modules 2 included in Figure 3. On the right lateral surface 24 of the leftmost module 2 a socket 18a is provided, and on the left lateral 25 surface of the module 2 in the middle a mating plug 18b is provided. The socket 18a and the plug 18b are arranged such that they can operatively engage each other in the relative position of the two modules 2 defined by the mechanical coupling means 13.

Figure 3 shows the rear side of the system 1. As can be seen, each of the modules 2 comprises a separate and physically distinct straight transport section 8 mounted on the rear surface of the housing 3 below the cantilevered portion 7 and immediately below the lower rear border of the interior working space 6. The transport section 8 of each module 2 comprises a support structure 20 including a lower horizontal portion 21, which is fixedly secured to and extends perpendicularly from the rear portion of the housing 3, and two upright column portions 22, which extend perpendicularly from the lower horizontal portion 21 and are spaced from each other in the direction of extension of the lower horizontal portion 21. On the upper end of the two column portions 22 an elongate and straight conveyor 23 extending between a first end 40 and a second end 41 and comprising two parallel conveyor belts 23a, 23b is supported. The conveyor 23 and the two conveyor belts 23a, 23b extend horizontally between the two lateral faces 24 and 25 of each module 2, i.e. each end of the conveyor belts 23a is disposed proximate to and preferably flush with one of the lateral faces or sides 24 and 25. An electric motor unit 26 is mounted below each conveyor 23 and is operably coupled to the conveyor belts 23a and 23b by means of one or more drive belts 42 in such a manner that they can be driven in opposite directions. For this purpose the electric motor unit 26 may comprise two separate electric motors or may comprise a single electric motor the output of which is suitably coupled to the two conveyor belts 23a, 23b. The electric motor unit 26 is communicatively coupled to a controller (not shown) controlling the operation of the conveyors 23. As shown in Figure 3, the conveyor belts 23a, 23b are suitable for transporting tube-shaped sample containers 27, which are received in a transport vessel 28, in an upright position.

Importantly, the conveyors 23 of the individual modules 2 are physically distinct from each other but are constructed and arranged in such a manner that after mechanically coupling the three modules 2 in series as shown in Figures 1 to 3 the three distinct conveyors 3 form a single overall conveyor extending along the length of the system 1. For this purpose, the conveyors 23 and the conveyor belts 23a, 23b are mounted at the same height, and the conveyor belts 23a and 23b of adjacent modules 2 are aligned with the conveyor belts 23a and 23b, respectively, of the adjacent module 2. In other words, the ends of the conveyors 23 are disposed proximate the lateral faces 24, 25 of the modules 2 such that after mechanical coupling of the modules 2 facing ends of adjacent conveyors 23 are located with respect to each other in such a manner that a sample container 27 and the corresponding transport vessel 28 travelling along one of the conveyor belts 23a, 23b of one of the conveyors and reaching the end of that conveyor belt is automatically transferred to the corresponding conveyor belt 23a, 23b of the adjacent conveyor 23. Of course, the electric motor units 26 are controlled such that the conveyor belts 23a all move in the same direction and that the conveyor belts 23b all move in the same direction opposite the direction of the conveyor belts 23a.

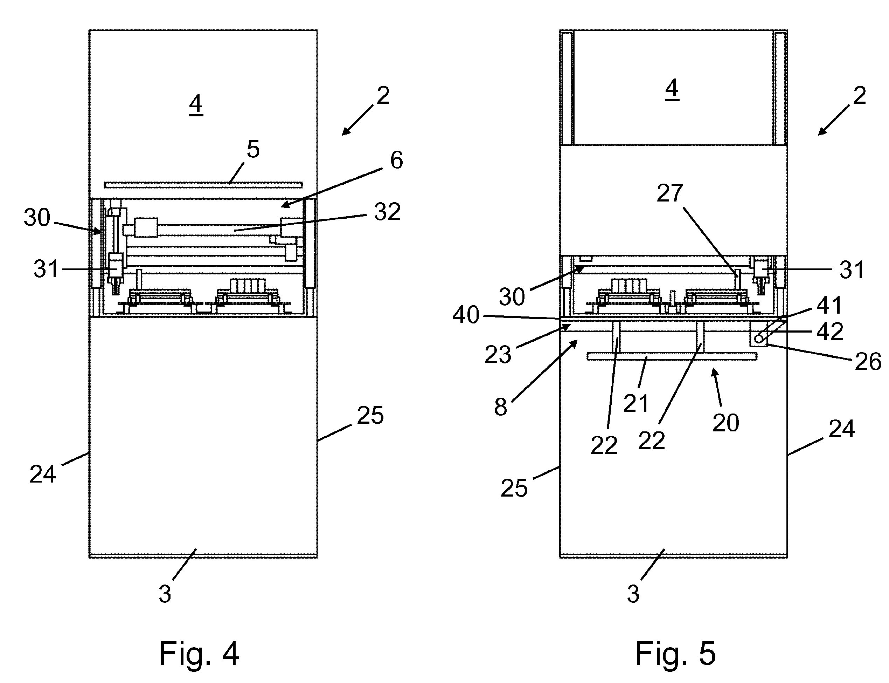

Figures 4 and 5 show a front view and a rear view, respectively, of one of the modules 2 with the sliding cover 4 in the open position. For ease of illustration, the Figures do not show any of the mechanical coupling means 13, electrical connection terminals 17a, 17b and communication ports 18a, 18b in fact arranged on the lateral faces or sides 24 and 25 of the module 2.

As can be taken from Figures 4 and 5, inside the working space 6 and above the sliding tables 9 and the racks 11a, 11b supported on them a transport means 30 adapted for transporting sample containers between the racks 11a, 11b and the conveyor 23 is mounted. In the illustrated example the transport means 30 comprises a gripper 31 mounted to an x-y-drive, which in turn comprises a cross-beam 32 extending perpendicularly to the two lateral faces 24 and 25 and two rails 33 (see Figure 2) each supporting one of the two opposite ends of the cross-beam 32. Each rail 33 is secured to one of the lateral faces 24, 25 at a height corresponding to the cantilevered portion 7 of the housing 3 and extends parallel to the respective lateral face 24, 25 in a plane parallel to the plane defined by the sliding tables 9. The rails 33 extend over the conveyor belts 23a, 23b.

The transport means 30 is communicatively connected to the controller of the system 1 and can be controlled to move the cross-beam 32 into a desired position in a direction perpendicular to the plane of Figures 4 and 5, and to move the gripper 31 along the cross-beam 32 into a desired position. Further, the gripper 31 can be moved up and down, e.g. by electric, hydraulic or pneumatic means, in the direction perpendicular to the plane defined by the sliding tables 9. In this way, the gripper 31 can be selectively moved to any position over the sliding tables 9 and to positions over each of the conveyor belts 23a, 23b, and the gripper 31 can then be operated to pick up or deposit a sample container 27 from or at the selected location.

For ease of illustration means for transferring sample containers 27 and corresponding transport vessels 28 between the two conveyor belts 23a and 23b in particular at the two ends of the overall conveyor formed by the three individual conveyors 23. Such transfer means allow for a continuous transport of sample containers 27 on the overall conveyor. Preferably, each individual module 2 will be provided with suitable transfer means at the ends of its conveyor 23 in order to maximize the flexibility when using the modules 2. Such transfer means will usually be disposed in an inoperative position except for the transfer means at the outermost ends of the overall conveyor.

## Claims

1. Laboratory automation system for automatically handling sample containers (27) comprising a controller adapted for controlling the laboratory automation system (1) to carry out a laboratory automation method, **characterized in that** the laboratory automation system (1) further comprises a plurality of separate, selectively removable sample container handling modules (2) coupled to each other in series, wherein each module (2) comprises:
- a frame (3) having a first face (24) and a second face (25),
- a conveyor (23) having a first end (41) proximate the first face (24) and a second end (40) proximate the second face (25) and being adapted for transporting sample containers (27) between the first end (41) and the second end (40), and
- mechanical coupling means (13) arranged at the first face (24) and the second face (25), and
wherein at least one of the modules (2) comprises:
- at least one sample container processing device (9-11) supported on the frame (3) and adapted for automatically performing a sample container processing step, and
- a transport means (30) for automatically transporting sample containers (27) between the conveyor (23) and the at least one sample container processing device (9-11),
wherein the controller is communicatively coupled to each module (2) via a communication link for controlling the operation of the individual modules (2), and
wherein each two adjacent modules (2) are arranged with the first face (24) of one of the two modules (2) facing the second face (25) of the other of the two modules (2) and are mechanically coupled in this position by means of the mechanical coupling means (13) at the facing first and second faces (24, 25) in such a manner that the conveyors (23) of the individual modules (2) together form an overall continuous conveyor extending along the length of the laboratory automation system (1) and suitable for continuously transporting sample containers (27) along the length of the laboratory automation system (1).

2. Laboratory automation system according to claim 1, wherein the conveyor (23) of each module (2) comprises two distinct conveyor portions (23a, 23b) extending between the first end (41) and the second end (40) of the conveyor (23), wherein the two conveyor portions (23a, 23b) are adapted for transport in opposite directions.

3. Laboratory automation system according to claim 1 or claim 2, wherein the conveyor (23) of each module (2) comprises a conveyor belt (23a, 23b).

4. Laboratory automation system according to any of the preceding claims, wherein the conveyor (23) of each module (2) is arranged such that after mechanical coupling of two adjacent modules (2) by means of the mechanical coupling means (13) the first end (41) of the conveyor (23) of one of the two adjacent modules (2) is located adjacent the second end (40) of the conveyor (23) of the other of the two adjacent modules (2) in such a manner that sample containers (27) can be transported by one of the conveyors (23) to the other conveyor (23).

5. Laboratory automation system according to any of the preceding claims, wherein the conveyor (23) of each module (2) is arranged along one side of the frame (3) extending between the first face (24) and the second face (25).

6. Laboratory automation system according to any of the preceding claims, wherein the sample container processing devices (9-11) of the modules (2) comprising such devices are selected from the group comprising sample container detection devices, sample container identification devices, sample container sorting devices, sample container decapping devices, sample container recapping devices and sample container storing devices.

7. Laboratory automation system according to any of the preceding claims, wherein each module (2) further comprises at least one electrical connection terminal (17a, 17b) at the first face (24) and the second face (25), wherein the electrical connection terminals (17a, 17b) are arranged to enable electrical coupling of adjacent modules (2) by means of cooperating ones of the electrical connection terminals (17a, 17b) arranged at the facing first and second faces (24, 25) of the two modules (2) such that power can be transferred along the sequence of modules (2) between adjacent modules (2).

8. Laboratory automation system according to any of the preceding claims, wherein each module (2) further comprises at least one communication port (18a, 18b) at the first face (24) and the second face (25), wherein the communication ports (18a, 18b) are arranged to enable communicatively connecting adjacent modules (2) by means of cooperating ones of the communications ports (18a, 18b) arranged at the facing first and second faces (24, 25) of the two modules (2).

9. Laboratory automation system according to claim 8, wherein the individual modules (2) are communicatively connected to a common data bus by means of the cooperating communication ports (18a, 18b) at the facing first and second faces (24, 25) of adjacent modules (2), and wherein the controller is likewise communicatively connected to the common data bus such that the data bus establishes the data link.

10. Laboratory automation system according to any of the preceding claims, wherein the modules (2) are adapted for automatically sending module identification information via the data link to the controller, thereby enabling the controller to maintain information about the number, capabilities and relative arrangement of the various modules (2) included in the system (1).

11. Laboratory automation system according to claim 10, wherein each module (2) is adapted for automatically determining its relative position within the system (1), wherein the identification information sent by the modules (2) includes an indication of their relative positions.

12. Laboratory automation system according to any of the preceding claims, wherein at least one of the modules (2) having a sample container processing device (9-11) comprises as part of the sample container processing device (9-11):
- at least one rack receptacle (9, 10) for receiving a rack (11a, 11b) adapted for holding a plurality of sample containers (27), wherein the transport means (30) is adapted for transporting sample containers (27) between the conveyor (23) and a rack received in the at least one rack receptacle, and
- means for automatically detecting the presence of a rack in the at least one rack receptacle as well as
- the arrangement and location of sample container receiving portions,
- the type and/or
- the identity of racks received in the at least one rack receptacle,
wherein the at least one module (2) is adapted for automatically sending corresponding rack identification information via the data link to the controller, thereby enabling the controller to maintain information about the presence and the characteristics and/or identity of racks located in the at least one rack receptacle.

13. Laboratory automation system according to claim 12 comprising a plurality of said rack receptacles, wherein each rack placed in one of the rack receptacles defines a different target location for sample containers (27), and wherein the controller is adapted for controlling operation of the system (1) such that each of a plurality of sample containers (27) is selectively transported from an input section to a particular target location.

14. Sample container handling module which is adapted for being used as one of the sample container handling modules (2) of a laboratory automation system according to any of claims 1 to 13.
